# EUROPEAN PATENT SPECIFICATION

(11) **EP 0 892 164 B1**
(45) Date of publication and mention of the grant of the patent: **25.02.2004**
(21) Application number: 98113425.7
(22) Date of filing: 17.07.1998
(51) Int. Cl.: F02D 21/08, F02D 41/18, F02D 41/14, F02D 41/38

(54) **Exhaust gas recirculation control system for automobile engine**
Steuersystem für Abgasrückführung für Kraftfahrzeugmotor
Système de commande de recirculation de gaz d'échappement pour moteur automobile

(30) Priority: 17.07.1997 JP 19227797; 26.06.1998 JP 18077198
(43) Date of publication of application: 20.01.1999
(73) Proprietor: MAZDA MOTOR CORPORATION, Aki-gun, Hiroshima-ken (JP)
(72) Inventor: Saito, Tomoaki, Higashihiroshima-shi, Hiroshima (JP); Yasutomi, Katsuaki, Hiroshima-shi, Hiroshima (JP)
(74) Representative: Müller-Boré & Partner Patentanwälte

(56) References cited:
- EP-A- 0 659 994
- EP-A- 0 774 574
- EP-A- 0 892 166
- US-A- 5 251 598
- PATENT ABSTRACTS OF JAPAN vol. 1996, no. 11, 29 November 1996 (1996-11-29) & JP 08 193534 A (NISSAN MOTOR CO LTD), 30 July 1996 (1996-07-30)
- PATENT ABSTRACTS OF JAPAN vol. 012, no. 183 (M-703), 28 May 1988 (1988-05-28) & JP 62 294760 A (NIPPON DENSO CO LTD), 22 December 1987 (1987-12-22)
- PATENT ABSTRACTS OF JAPAN vol. 1996, no. 10, 31 October 1996 (1996-10-31) & JP 08 144867 A (MITSUBISHI MOTORS CORP), 4 June 1996 (1996-06-04)

## Description

The invention relates to an exhaust gas recirculation control system for an automobile engine.

Typically, exhaust gas recirculation control systems for, for example, an automobile diesel engine are designed and adapted to interrupt recirculation of exhaust gas during idling by closing an exhaust gas recirculation (EGR) valve so that fuel is mixed with flesh intake air and burnt in cylinders of the diesel engine. In such a manner, emissions of nitrogen oxides (NOx) are controlled even during idling by lowering the oxygen content of air introduced into the cylinders. Such an exhaust gas recirculation control systems for an automobile diesel engine is known from, for example, Japanese Patent Publication No. 7 - 117006.

In the case where the diesel engine is feedback controlled to attain a desired speed during idling, in order to prevent the diesel engine from dropping its idle speed following an increase in engine load which occurs due, for example, to actuation of engine driven-supplementary equipments and the like, it is typical to execute idle speed control in which the diesel engine is controlled to attain the desired speed by controlling the amount of fuel delivered into the cylinders. During execution of the idle speed control, in order to control emissions of nitrogen oxides (NOx) from the diesel engine, it is thought to open the exhaust gas recirculation (EGR) valve to admit recirculation of a large amount of exhaust gas into the cylinders. However, because recirculation of exhaust gas is accompanied by a decrease in the amount of flesh air introduced into the cylinders, if increasing the amount of fuel against a drop in engine speed during idiing, the air-fuel ratio or the excess air factor becomes greatly smaller, in other words, the air-fuel mixture is easily enriched.

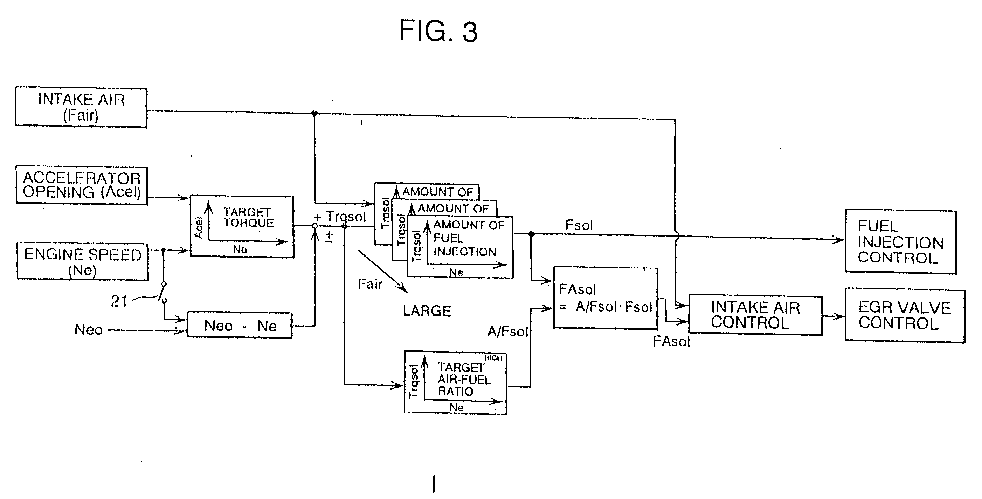

In view of the air-fuel ratio, if gradually enriching an air-fuel mixture, the combustibility of the air-fuel mixture deteriorates at air-fuel ratios below a limit ratio A to generation of an allowable amount of smoke as shown in Figure 3, as a result of which, the amount of smoke sharply increases above the allowable amount as shown in Figure 3. On the other hand, in order to control emissions of nitrogen oxides (NOx) in the exhaust gas, there is a strong demand for introducing a large amount of recirculated exhaust gas into the cylinders. In the light of these circumstances, it is desirable to deliver an air-fuel ratio as close as to but below a limit to generation of undesirable smoke.

If performing the idle speed control while an air-fuel mixture at an air-fuel ratio close to the limit ratio is burnt under recirculated exhaust gas, increasing the amount of fuel against a drip in engine speed possibly lowers the air-fuel ratio below the limit ratio. In order to avoid such an undesirable change in air-fuel ratio, while an upper limit to an increase in the amount of fuel may be employed, however, it is hard to certainly prevent a drop in engine speed and it is feared that the engine possibly stalls if the worst happens.

In order to prevent a drop in air-fuel ratio below a limit to generation of undesirable smoke, there has been proposed various techniques. One of such techniques known from, for example, Japanese Unexamined Patent Publication No. 8 - 144867 is to control the amount of exhaust gas that is recirculated based on an air-fuel ratio detected based on a measurement by a linear oxygen (O₂) sensor so as to deliver a limit air-fuel ratio to generation of undesirable particulate (smoke). In the case where the exhaust gas recirculation control is performed based on a measurement by a linear oxygen (O₂) sensor disposed in an exhaust gas passage, there is a problem that introduction of exhaust gas into the engine is accompanied by a delay from detection of an air-fuel ratio with the linear oxygen (O₂) sensor, which always leads to aggravation of responsiveness of the air-fuel ratio control toward a target air-fuel ratio. In addition, installation of the linear oxygen (O₂) sensor is disadvantageous in view of costs.

As a further example, EP-A-659994 relates to a closed-loop engine control and, more particularly, to a closed-loop control of engine exhaust gas recirculated to an engine air intake, wherein a series of dedicated adaptive correction values are selectively updated and stored in memory in response to the degree of deviation for corresponding engine operating ranges.

It is an object of the invention to provide an exhaust gas recirculation control system for an engine for exhaust gas partly recirculated into an engine to control an air-fuel ratio having an improved responsiveness.

This object is solved by an exhaust gas recirculation control system having the features disclosed in claim 1. Preferred embodiments are subject of the dependent subclaims.

Accordingly, there is provided an exhaust gas recirculation control system which controls the amount of intake air introduced into an engine which consists of fresh intake air and exhaust gas that is recirculated, and, more specifically, determines a target amount of fresh intake air based on a target air-fuel ratio and an amount of fuel delivered into the engine and admits the target amount of exhaust gas to the engine.

The exhaust gas recirculation control system of the invention is characterized by determining a target air-fuel ratio, determining a target amount of fresh intake air excluding exhaust gas admitted to an engine on the basis of the target air-fuel ratio and an amount of fuel delivered into the engine, and controlling an amount of exhaust gas admitted to the engine so as to bring an amount of fresh intake air monitored by an air flow sensor to the target amount of intake air.

With the exhaust gas recirculation control system, as compared with a prior art exhaust gas recirculation control system which incorporates an air-fuel ratio sensor, there is no delay in the control of exhaust gas recirculation due to detection of an air-fuel ratio by an air-fuel sensor, and the simultaneous control of an air-fuel ratio and exhaust gas recirculation provides improvement of responsiveness of the control to changes in engine operating conditions. Further, the disuse of an air-fuel ratio sensor save production costs.

By determining the target air-fuel ratio to be close to a limit to generation of more than a specified amount of smoke, a large amount of exhaust gas is admitted to the engine with an effect of reducing NOx emissions as well as restraining generation of smoke as less as possible.

The feedback control of the amount of exhaust gas that is recirculated based on an amount of fresh intake air detected by an air flow sensor and a target amount of fresh intake air improves the accuracy of air-fuel ratio control. When the engine is during transition in operating condition such as acceleration, the degree of exhaust gas recirculation feedback control is increased to improve the responsiveness of the air-fuel ratio control. On the other hand, while on non-transition in operating condition such as idling, the degree of exhaust gas recirculation feedback control is increased to provide a delay in exhaust gas recirculation, ensuring the stability of combustion.

During the exhaust gas recirculation control, the amount of fuel is controlled so as to deliver a target air-fuel ratio during idling and, based on which, the target amount of fresh intake air is determined. By controlling both the amount of fresh intake air to a target amount and an engine speed toward a target speed, the responsiveness of air-fuel ratio control during idling is significantly improved.

An exhaust gas recirculation control system according to another embodiment of the invention which controls an exhaust gas recirculation valve to.admit partly exhaust gas that is recirculated into an engine and controls fuel injection means to deliver an amount of fuel into the engine so as to bring an engine speed to a target speed when a change in engine output torque is detected during idling. The exhaust gas recirculation control system controls the exhaust gas recirculation valve to open so as to deliver an air-fuel ratio close to a limit to generation of more than a specified amount of smoke while the fuel injection means controls an amount of fuel to bring an engine speed to a target speed,

With the exhaust gas recirculation control system, while the fuel injection is controlled to control a change in engine output torque when the change is detected during idling, the exhaust gas recirculation valve is controlled to open so as to deliver an air-fuel ratio close to a limit to generation of more than a specified amount of smoke. By controlling the exhaust gas recirculation valve in response to an increase or a decrease the amount of fuel injection, a large amount of exhaust gas is admitted to the engine with an effect of reducing NOx emissions as well as restraining generation of smoke as less as possible.

The foregoing and other objects and features of the present invention will be clearly understood from the following detailed description of preferred embodiments when read in conjunction with the accompanying drawings in which:
Figure 1 is a schematic conceptual view showing an engine equipped with an exhaust gas recirculation control system of the invention;
Figure 2 is a schematic view of an engine equipped with an exhaust gas recirculation control system according to an embodiment of the invention;
Figure 3 is a functional block diagram of a controller of the exhaust gas recirculation control system of Figure 1;
Figure 4 is a flow chart illustrating the fuel injection control sequence routine;
Figure 5 is a flow chart illustrating the exhaust gas recirculation control sequence routine;
Figure 6 is a characteristic diagram showing corrected torque relative to the difference between a target idle speed of rotation and an actual engine speed;
Figure 7 is a characteristic diagram showing a basic amount of exhaust gas recirculation relative to a target amount of flesh air;
Figure 8 is a characteristic diagram showing a correction amount of exhaust gas recirculation relative to the difference between a target amount of flesh air and an actual amount of flesh air;
Figures 9A through 9F are time charts showing controlled variables relative to a change in opening of an exhaust gas recirculation valve;
Figure 10 is a functional block diagram of a controller of the exhaust gas recirculation control system of another embodiment of the invention;
Figure 11 is a flow chart illustrating the exhaust gas recirculation control sequence routine in the other embodiment;
Figure 12 is a characteristic diagram showing opening of an exhaust gas recirculation valve relative to the difference between a target air-fuel ratio and an actual air-fuel ratio in the other embodiment;
Figure 13 is a characteristic diagram showing-a change in the amount of smoke relative to a change in air-fuel ratio;
Figure 14 is a flow chart illustrating the fuel injection control sequence routine for an exhaust gas recirculation system in accordance with another embodiment of the invention; and
Figure 15 is a characteristic diagram showing a basic amount of exhaust gas recirculation relative to a target amount of flesh air in the exhaust gas recirculation system in accordance with the other embodiment of the invention.

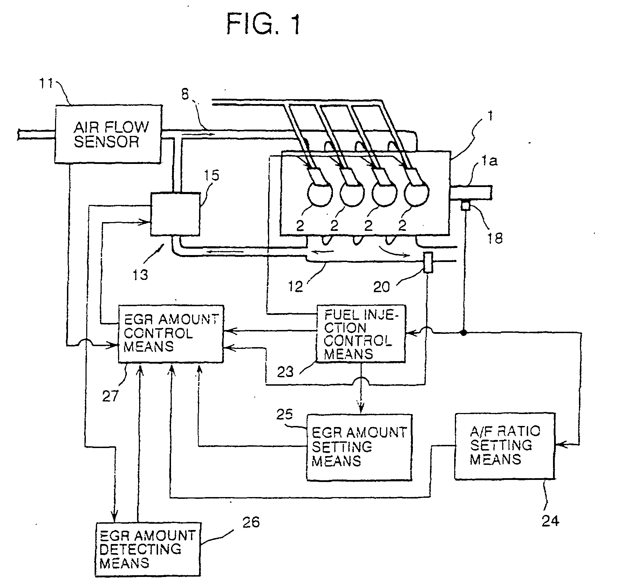

Referring to the drawings in detail and, in particular, to Figure 1 conceptionally illustrating a functional structure of an exhaust gas recirculation system of the invention, an engine 1 incorporates fuel injection means 23 to control the amount of fuel so as to restrain a change in engine output torque upon an occurrence of an engine output torque change and exhaust gas recirculation means 1 3 to admit recirculation of part of exhaust gas to the intake manifold by controlling an exhaust gas recirculation valve 15. While the fuel injection means 23 controls the amount of fuel to restrain a change in engine output torque, exhaust gas recirculation control means 27 controls opening of the exhaust gas recirculation valve 15 to deliver a target air-fuel ratio which is determined by target air-fuel ratio determining means 24, so as to be close to but below a limit ratio to generation of a specified amount of smoke. Specifically, the exhaust gas recirculation control means 27 controls the exhaust gas recirculation valve 15 to admit the amount of exhaust gas recirculated into an intake line, and hence the amount of fresh intake air necessary to deliver the target air-fuel ratio, which is determined by exhaust gas recirculation amount determining means 25 and is detected by exhaust gas recirculation amount detecting means 26. Otherwise, the exhaust gas recirculation control means 27 controls the exhaust gas recirculation valve 15 to remove a difference the amount of intake air detected by air flow detecting means 11 from the target amount of intake air determined based on the amount of fuel injection and the target air-fuel ratio.

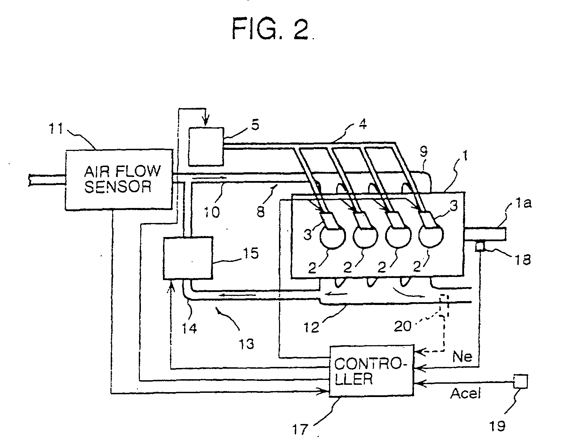

Figure 2 shows an exhaust gas recirculation system in accordance with an embodiment of the invention. As shown, a diesel engine 1, for example an in-line, four cylinder diesel engine, is connected to a transmission (not shown) through a crankshaft 1 a. The engine 1 is provided with fuel injectors 3 through which fuel is delivered directly into combustion chambers of all cylinders 2, respectively. Each fuel injector 3 is connected to a fuel pump 5 through a fuel supply pipe 4. While the fuel injector 3 remains open, the fuel pump 5 pressurizes and delivers fuel into the combustion chamber of the cylinder 2. Intake air is introduced into the respective cylinders 2 through an intake pipe 8. This intake pipe 8 is comprised of a common intake pipe 10 and an intake manifold 9 connected to the respective cylinders 2. The common intake pipe 10 is provided with an air-f!ow sensor 11 for metering the amount of flesh intake air introduced into the cylinder 2. A hot film type of air flow sensor may be employed to meter the amount of air passing therethrough in opposite directions. Exhaust gas from the respective cylinders 2 is discharged through an exhaust manifold 12 and is partly circulated from the exhaust manifold 12 into the intake pipe 8 through an exhaust gas recirculation system 13 disposed between the intake pipe 8 and the exhaust manifold 12. The exhaust gas recirculation system 13 is comprised of an exhaust gas recirculation pipe 14 disposed between the common intake pipe 10 and the exhaust manifold 12 and an exhaust gas recirculation valve 15 installed in the exhaust gas recirculation pipe 14.

The exhaust gas recirculation system cooperates with a speed sensor 18 for detecting a rotational angle of the crankshaft 1 a as the rotational speed of the engine 1 and an accelerator sensor 19 for detecting strokes of an accelerator pedal (not shown) as well as the air-flow sensor 11. A controller 17 such as comprising a microprocessor control unit receives signals provided by the respective sensors 11, 18 and 19 and provides control signals with which the fuel injectors 3, the fuel pump 5 and the exhaust gas recirculation valve 15 are controlled.

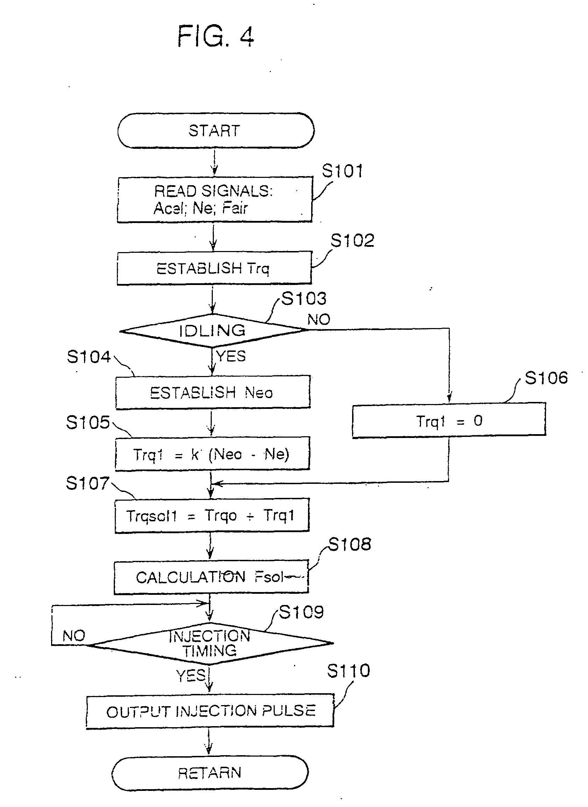

Fuel injection control is hereafter described following the sequence routine illustrated by a flow chart shown in Figure 4 with reference to Figure 3 which is a block diagram of signal processing.

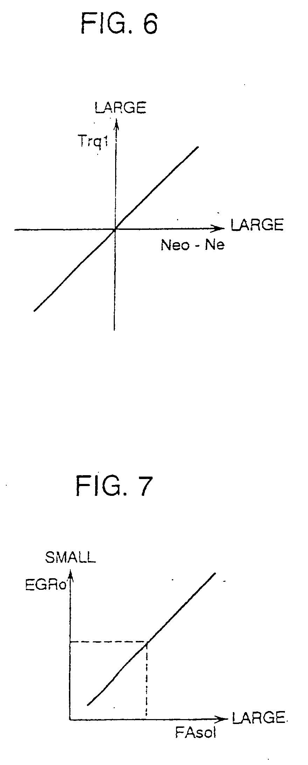

Referring to Figure 4, the fuel injection control sequence routine commences timely when the crankshaft 1a reaches a specified rotational angle before an expansion stroke of each cylinder 2 and, when the flow chart logic commences, control passes a function block at step S101 where signals from the sensors 11, 18 and 19 are read in to find current data including an accelerator pedal stroke *Acel*, an engine speed *Ne* and the amount of intake air *FAir.* Subsequently, at step S102, basic torque *Trqo* is determined based on the engine speed *Ne* and the accelerator pedal stroke *Acel* on a basic torque map. The basic torque map which specifies basic torque *Trqo* with respect to engine speed *Ne* and accelerator pedal stroke *Acel* as shown in Figure 3. At step S103, a judgement is made as to whether the engine 1 is idling. In order to make the judgement, the controller 17 includes idle switch means 21 shown in Figure 3 which turns ON in response to a change in engine speed to a specified speed while the engine throttle remains fully closed. The engine 1 is judged to be idling while the idle switch 21 turns ON. When the engine 1 is idling, i.e. the answer to the judgement is affirmative (YES), a target engine speed *Neo,* which is specified with respect to the temperature of engine cooling water, is determined as a target idle speed on a target idle speed map at step S104. Correction torque *Trql* is calculated at step S105. The correction torque *Trql* is given by multiplying the difference of the target engine speed *Neo* from the engine speed *Ne* by a gain *k.* As shown in Figure 6, the correction torque *Trql* is linearly proportional to the speed difference *(Neo - Ne)* and takes a positive value or a negative value. A dead band where the correction torque *Trql* takes 0 (zero) may be provided for speed differences *(Neo - Ne)* whose absolute values are less than a specified value. Further, the speed difference *(Neo* - *Ne*) may be processed by PID feedback control. On the other hand, when the engine 1 is out of idling, i.e. the answer to the judgement is negative (NO), the correction torque *Trql* is directly set to 0 (zero) at step S106.

After determining the correction torque *Trql* either at step S105 or at step S106, target torque *Trqsol*, which is given as the sum of the basic torque *Trqo* and the correction torque *Trql*, is calculated at step S107 and a target amount of fuel injection *Fsol* is determined according to the amount of flesh intake air *FAir,* the target torque *Trqsol* and the engine speed *Ne* on a map at step S108. As shown in Figure 3, maps of the target amount of fuel injection *Fsol* are provided with respect to engine speed *Ne*, target torque *Trqsol* and the amount of fresh intake air *FAir.* For the amount of fresh intake air *FAir* which is not specified on any map, the target amount of fuel injection *Fsol* is calculated by interpolation. Subsequently, a judgement is made at step S109 as to whether the cylinder 2 is ready for fuel injection. As soon as the cylinder 2 becomes ready for fuel injection, a fuel injector 3 of the cylinder 2 is pulsed to deliver the determined amount of fuel injection *Fsol* at step S110.

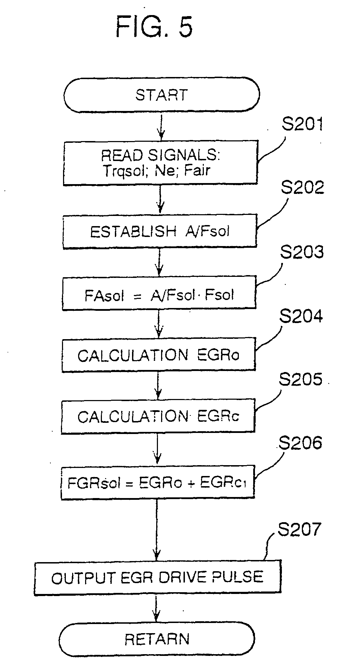

Exhaust gas recirculation control is hereafter described following the sequence routine illustrated by a flow chart shown in Figure 5 with reference to Figure 3.

Referring to Figure 5, the exhaust gas recirculation control takes place following the fuel injection control and, when the flow chart logic commences, control passes a function block at step S201 where current data including the target torque *Trqsol* determined during the fuel injection control, an engine speed *Ne* and the amount of fresh intake air *FAir.* Subsequently, a target air-fuel ratio *A*/*Fsol* is determined with respect to engine speed *Ne* and target torque *Trqsol* on a target air-fuel ratio map as shown in Figure 3 at step S202. The target air-fuel ratio map specifies a target air-fuel ratio *A*/*Fsol* such that it is close to but below a limit ratio to generation of more than a specified amount of smoke with respect to a change in air-fuel ratio. At step S203, a target amount of fresh intake air *FAsol* is determined by multiplying the target air-fuel ratio *A*/*Fsol* by the target amount of fuel injection *Fsol.*

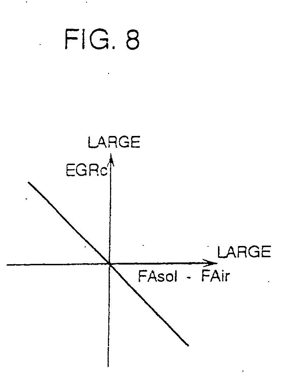

Thereafter, the exhaust gas recirculation valve 15 is controlled to remove entirely or almost entirely a difference between a target amount of fresh intake air *FAsol* and an amount of fresh intake air *FAir* through steps S204 to S207. Specifically, a target amount of exhaust gas recirculation *EGRo* necessary to admit the target amount of fresh intake air *FAsol* and a correction amount of exhaust gas recirculation *EGRc* meeting a difference of the amount of fresh intake air are calculated at steps S204 and S205, respectively. The target amount of exhaust gas recirculation *EGRo* is inversely proportional to the target amount of fresh intake air *FAsol* as shown in Figure 7. As a practical matter, since there is a several percent of oxygen (O₂) is contained in the exhaust gas, recirculation of exhaust gas causes a change in air-fuel ratio. For this reason, the target amount of exhaust gas recirculation *EGRo* relative to the target amount of fresh intake air *FAsol* is determined under consideration of the oxygen content of exhaust gas recirculation. The correction amount of exhaust gas recirculation *EGRc* is inversely proportional to an increase in the difference between the target amount of fresh intake air *FAsol* and the amount of fresh intake air *FAir* as shown in Figure 8.

After calculating the sum of the target amount of exhaust gas recirculation *EGRo* and the correction amount of exhaust gas recirculation *EGRc* as a total amount of exhaust gas recirculation *EGRsol* at step S206, the exhaust gas recirculation valve 15 is pulsed and opened to opening necessary to admit the total amount of exhaust gas *EGRsol* that is recirculated into an intake air stream at step S207.

As apparent from the above description, the fuel injection control is carried out through steps 104 through 110 (Figure 4) to deliver a target air-fuel ratio so that the engine attains a target speed Neo when a change in engine output torque occurs during idling.

The determination of a target air-fuel ratio *A*/*Fsol* close to a limit ratio to generation of more than a specified amount of smoke with respect to a change in air-fuel ratio, which is made based on engine operating conditions, is carried out at step S202 (Figure 5). The determination of a target amount of fresh intake air *FAsol*, other than a target amount of exhaust gas recirculation *EGRo,* made based on the target air-fuel ratio and the target amount of fuel injection is carried out at step S203 to deliver the target air-fuel ratio. Further, through steps S204 - S207, the feedback control of exhaust gas recirculation is carried out by controlling the exhaust gas recirculation valve 15 to admit a target amount of exhaust gas recirculation EGRo based on a difference of the target amount of fresh intake air from a current amount of fresh intake air *(FAsol - FAir)* so as to remove the difference (*FAsol - FAir*). In other words, through steps S204 - S207, while the fuel injection control is carried out to deliver the target air-fuel ratio through steps S104 - 110 (Figure 4), the exhaust gas recirculation valve 15 is controlled such that an air-fuel ratio reaches the limit ratio to generation of more than a specified amount of smoke with respect to a change in air-fuel ratio.

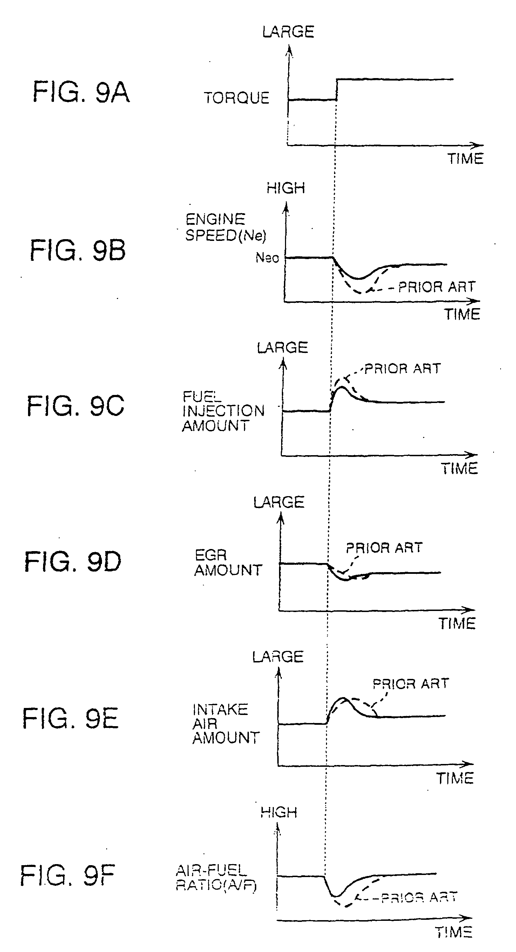

With the exhaust gas recirculation control system according to the above embodiment, when the idle speed feedback control is performed to attain a target idle speed *Neo* during idling, target torque *Trqsol* is determined as the sum of basic torque *Trqo* determined based on an engine speed *Ne* and accelerator pedal stroke *Acel* and correction torque *Trql*, and a target amount of fuel injection *Fsol* is determined based on these target torque *Trqsol*, engine speed *Ne* and the amount of fresh intake air *FAir.* At the moment of fuel injection, the fuel injector 3 is pulsed to deliver the target amount of fuel injection *Fsol* into the cylinder 2.Consequently, in the idle speed feedback control, when the engine speed *Ne* drops from the target engine speed *Ne* as indicated by a solid line in Figure 9B due to an increase in engine load resulting from actuation of the engine driven supplementary equipments as shown in Figure 9A, the target amount of fuel injection *Fsol* is increased correspondingly to the drop in engine speed as indicated by a solid line in Figure 9B, causing the engine 1 to attain the target engine speed *Neo* as indicated by a solid line in Figure 9C. After the fuel injection control, a target air-fuel ratio *A*/*Fsol* is determined according to the engine speed *Ne* and the target torque *Trqsol*, and then a target amount of fresh intake air *FAsol* is determined based on these target air-fuel ratio *A*/*Fsol* and target amount of fuel injection *Fsol.* The exhaust gas recirculation valve 15 is opened to opening necessary to remove the difference between the target amount of fresh intake air *FAsol* and the amount of fresh intake air *FAir.*

As described above, because the target air-fuel ratio *A*/*Fsol* is predetermined on the target air-fuel ratio map and takes a value close to but below the limit ratio to generation of smoke, when the amount of fuel is controlled so as to restrain a change in engine torque during execution of the idle speed feedback control, the exhaust gas recirculation control system controls the exhaust gas recirculation valve 1 5 to deliver the target air-fuel ratio *A*/*Fsol* close to but below the limit ratio to generation of smoke. In this way, because, even when the amount of fuel changes increasingly or decreasingly to restrain a change in engine torque, the exhaust gas recirculation valve 15 is controlled to deliver an air-fuel ratio close to the limit ratio to generation of smoke correspondingly the change in the amount of fuel, while a drop in engine speed and generation of smoke are prevented during idling, a large amount of exhaust gas recirculation is introduced into the cylinder 1 with an effect of lowering the amount of nitrogen oxides (NOx) in the exhaust gas. In addition, because the exhaust gas recirculation valve 15 increases its opening with an increase in the amount of fuel injection, it is controlled to provide large opening even when a change in the amount of fuel injection is significant due to a large change in engine torque, the amount of exhaust gas recirculation is controlled so that the air-fuel ratio quickly reaches the limit ratio to generation of smoke, thereby securely lowering the amount of nitrogen oxides (NOx) in the exhaust gas.

Further, a target amount of fresh intake air *FAsol* is determined based on a target air-fuel ratio *A*/*Fsol* close to a limit to generation of smoke and a target amount of fuel injection *Fsol* so that the difference between the target amount of fresh intake air *FAsol* and the amount of fresh intake air *FAir* is removed, in other word, the target amount of exhaust gas recirculation *EGRo* necessary to deliver the target air-fuel ratio *A*/*Fsol* is determined based on the target amount of fuel injection *Fsol*, and then, the exhaust gas recirculation valve 15 is controlled to admit the target amount of exhaust gas recirculation *EGRo* into the cylinder 2. As a result, the exhaust gas recirculation valve 15 is controlled to vary its opening without an effect of spending time on introduction of exhaust gas into the cylinder 2 due to delay in valve operation or the position of the valve in the exhaust gas recirculation pipe 14. As indicated by a solid line in Figure 9D, upon an occurrence of a change in opening of the exhaust gas recirculation valve 15, the exhaust gas is quickly introduced into the cylinder 2 to its target amount *EGRo*. This allows use of a simple air flow sensor provided at a low cost with an effect of preventing generation of smoke and lowering the amount of nitrogen oxides (NOx) in the exhaust gas. In other words, the exhaust gas recirculation control system effectively prevents generation of smoke and lowering the amount of nitrogen oxides (NOx) in the exhaust gas without employing an oxygen sensor such as a linear oxygen (O₂) sensor for detecting an air-fuel ratio. Figures 9E and 9F show a change in the amount of fresh intake air and a change in air-fuel ratio, respectively, following a change in opening of the exhaust gas recirculation valve 15. In Figures 9A through 9F, each broken line indicates a change of controlled variable in the prior art exhaust gas recirculation control system which does not control opening of the exhaust gas recirculation valve according to the difference between the target amount of air and the amount of fresh intake air.

As shown in Figure 2, the exhaust gas recirculation control system may incorporate a linear oxygen (O2) sensor 20 as an air-fuel sensor for detecting an air-fuel ratio in the exhaust manifold 12. As is well known, the linear oxygen sensor 20 detects the concentration of oxygen (O2) in the exhaust gas manifold 12 and provides an output in proportion to the concentration of oxygen (O2) by which an air-fuel ratio is specified. The exhaust gas recirculation control system incorporating the linear oxygen (O2) sensor 20 performs the fuel injection control in the same manner as shown in Figure 4 and, however, the exhaust gas recirculation control in a different manner from that shown in Figure 5.

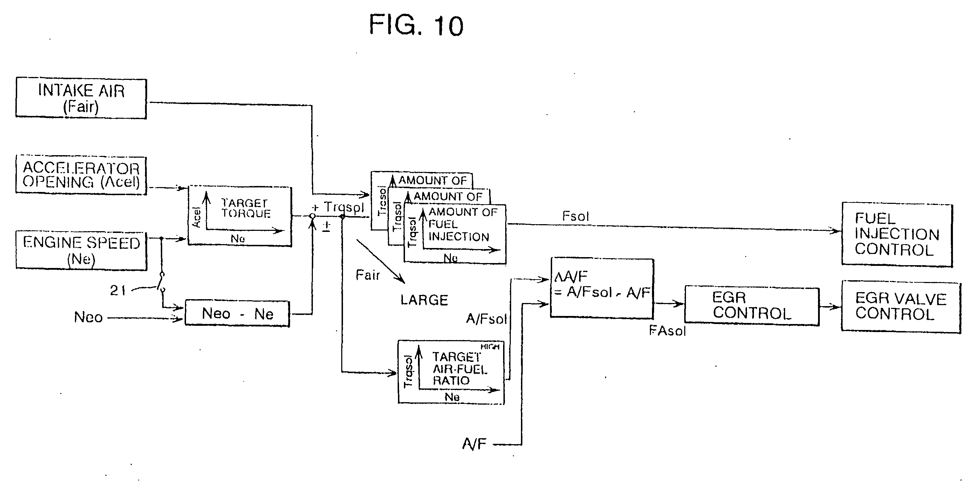

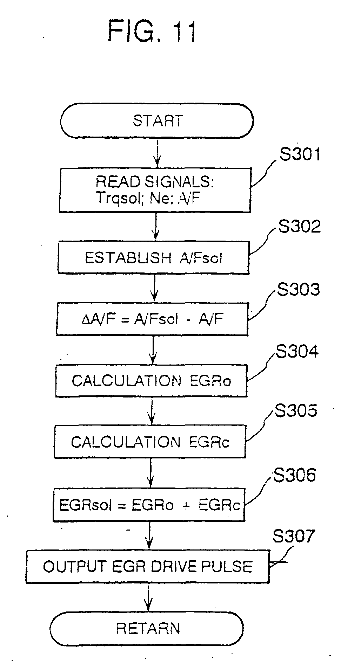

Exhaust gas recirculation control of the exhaust gas recirculation control system incorporating the linear oxygen sensor 20 is hereafter described following the sequence routine illustrated by a flow chart shown in Figure 11 with reference to Figure 10 which is a block diagram of signal processing.

Figures 10 and 11 show a sequence routine of the exhaust gas recirculation control taking place following the fuel injection control of an exhaust gas recirculation control system in accordance with another embodiment of the invention. In this embodiment, a fuel injection control is performed by the same sequence routine illustrated by the flow chart shown in Figure 4.

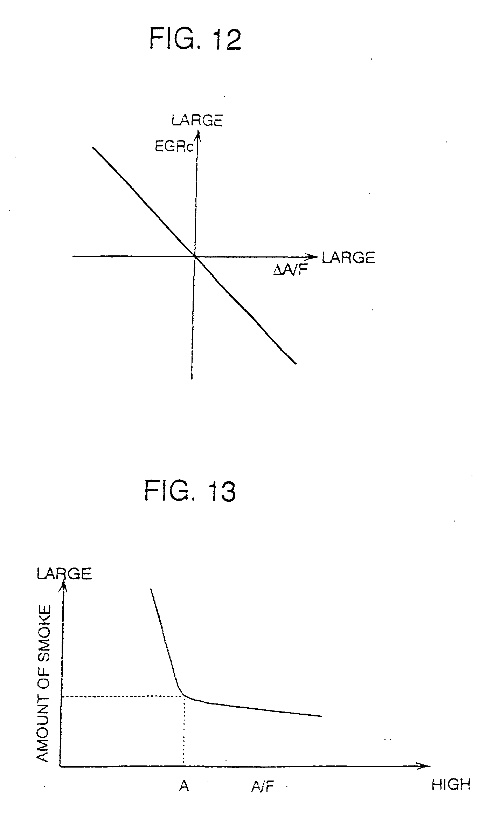

Referring to Figure 11 showing flow chart illustrating the sequence routine of the exhaust gas recirculation control, when the flow chart logic commences, control passes a function block at step S301 where current data including the target torque *Trqsol* determined during the fuel injection control, an engine speed *Ne* detected by an engine speed sensor 18 and an air-fuel ratio *A*/*F* detected by the linear oxygen sensor 20. Subsequently, a target air-fuel ratio *A*/*Fsol* is determined with respect to engine speed *Ne* and target torque *Trqsol* on a target air-fuel ratio map as shown in Figure 10 at step S302. As was previously described, the target air-fuel ratio map specifies a target air-fuel ratio *A*/*Fsol* so as to be close to but below a limit ratio to generation of smoke. At step S303, an air-fuel ratio difference Δ*A*/*F* between the target air-fuel ratio *A*/*Fsol* and the air-fuel ratio *A*/*F*. Thereafter, the exhaust gas recirculation valve 15 is controlled to remove completely or almost completely the air-fuel ratio difference Δ*A*/*F* through steps S304 to S307. Specifically, a target amount of exhaust gas recirculation *EGRo* and a correction amount of exhaust gas recirculation *EGRc* are calculated at steps S304 and S305, respectively. The target amount of exhaust gas recirculation *EGRo* is determined according to the target air-fuel ratio *A*/*Fsol* so as to lower generation of smoke and the amount of nitrogen oxides (NOx) in the exhaust gas. The correction amount of exhaust gas recirculation *EGRc* is inversely proportional to the air-fuel ratio difference Δ*A*/*F* as shown in Figure 12. After calculating the sum of the target amount of exhaust gas recirculation *EGRo* and the correction amount of exhaust gas recirculation *EGRc* as a total amount of exhaust gas recirculation *EGRsol* at step S306, the exhaust gas recirculation valve 15 is pulsed and opened to opening necessary to admit recirculation of the total amount of exhaust gas *EGRsol* into the cylinder 2 at step S307.

With the exhaust gas recirculation control system according to the above other embodiment, through steps S303, S306 and S307, the exhaust gas recirculation valve 15 is feedback controlled to open so as to remove the air-fuel ratio difference Δ*A*/*F* between a target air-fuel ratio *A*/*Fsol* and an air-fuel ratio *A*/*F*.

Consequently, even if there are engine operating conditions which cause a delay of introduction of exhaust gas recirculation into the cylinder, the exhaust gas recirculation valve 15 is controlled to provide a great change in opening so as to attain the target air-fuel ratio difference *A*/*Fsol*, so as to substantially prevent the delay of introduction of exhaust gas recirculation into the cylinder. Even in the case where the engine 1 causes a change in output torque as great as being accompanied by a great change in the amount of fuel injection, the exhaust gas recirculation valve 15 is appropriately controlled to admit exhaust gas sufficiently to cope with the increased amount of fuel. As a result, the air-fuel ratio quickly reaches the limit ratio to generation of smoke, thereby securely lowering the amount of nitrogen oxides (NOx) in the exhaust gas.

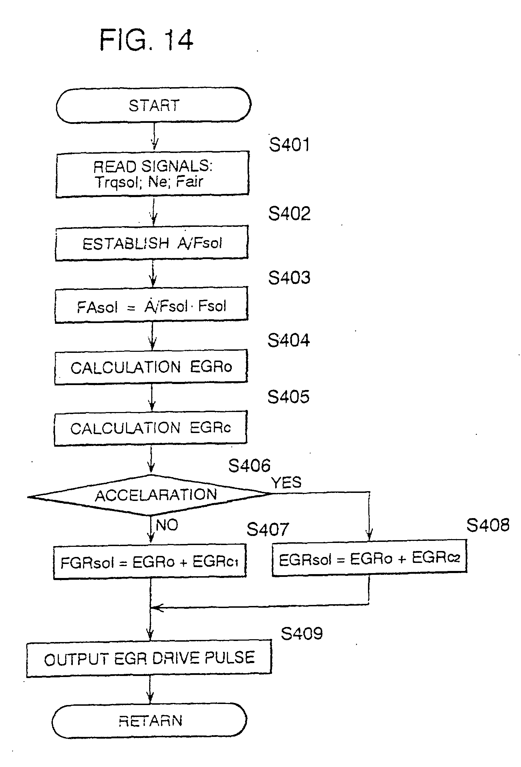

Figure 14 shows a sequence routine of the exhaust gas recirculation control of an exhaust gas recirculation control system in accordance with a further embodiment of the invention in which a correction amount of exhaust gas recirculation *EGRc* is varied according to engine operating conditions. In this embodiment, a fuel injection control is performed by the same sequence routine illustrated by the flow chart shown in Figure 4.

Referring to Figure 14, the exhaust gas recirculation control takes place following the fuel injection control and, when the flow chart logic commences, control passes a function block at step S401 where current data including the target torque *Trqsol* determined during the fuel injection control, an engine speed *Ne* and the amount of fresh intake air *FAir.* Subsequently, a target air-fuel ratio *A*/*Fsol* is determined with respect to engine speed *Ne* and target torque *Trqsol* on a target air-fuel ratio map at step S402. The target air-fuel ratio map specifies a target air-fuel ratio *A*/*Fsol* such that it is close to but below a limit ratio to generation of more than a specified amount of smoke with respect to a change in air-fuel ratio. At step S403, a target amount of fresh intake air *FAsol* is determined by multiplying the target air-fuel ratio *A*/*Fsol* by the target amount of fuel injection *Fsol.*

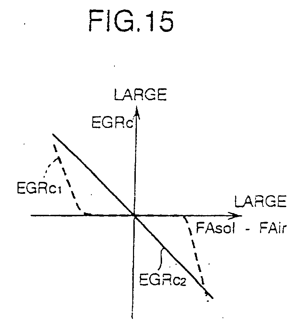

Subsequently, the exhaust gas recirculation valve 15 is controlled to remove entirely or almost entirely a difference between a target amount of fresh intake air *FAsol* and an amount of fresh intake air *FAir* through steps S404 to S407. Specifically, a target amount of exhaust gas recirculation *EGRo* necessary to admit the target amount of flesh intake air *FAsol* and first and second correction amounts of exhaust gas recirculation *EGRc1* and *EGRc2* are determined at steps S404 and S405, respectively. The second correction amount of exhaust gas recirculation *EGRc2* is used during acceleration and, as shown by a solid line in Figure 15, is inversely proportional to a change in difference between a target amount of fresh intake air *FAsol* and an amount of fresh intake air *FAir.* The first correction amount of exhaust gas recirculation *EGRc1* is used during idling which is one of non-transitional engine operating states. It remains 0 (zero) for intake air differences (*FAsol - FAir)* within certain limits from a zero intake air difference and is, however, inversely proportional to a change in intake air difference between a target amount of fresh intake air *FAsol* and an amount of fresh intake air *FAir,* as shown by a broken line in Figure 15.

After determination of first or second correction amount of exhaust gas recirculation *EGRc1* or *EGRc2,* a judgement is made at step S406 as to whether the engine 1 is in one of the transitional operating states. This judgement is carried out by monitoring an accelerator pedal stroke *Acel* detected by the accelerator pedal sensor 19. When the answer to the judgement is negative, this indicates that the engine 1 is not being accelerated, then, a total amount of exhaust gas recirculation *EGRsol* is determined by adding a first correction amount of exhaust gas recirculation *EGRc2* to the target amount of exhaust gas recirculation *EGRo* at step S407, and the exhaust gas recirculation valve 15 is subsequently pulsed and opened to opening necessary to admit the total amount of exhaust gas *EGRsol* that is recirculated into an intake air stream at step S409. On the other hand, when the answer to the judgement is affirmative, this indicates that the engine 1 is being accelerated, then, a total amount of exhaust gas recirculation *EGRsol* is determined by adding a second correction amount of exhaust gas recirculation *EGRc2* to the target amount of exhaust gas recirculation *EGRo* at step S408, and the exhaust gas recirculation valve 15 is subsequently pulsed and opened to opening necessary to admit the total amount of exhaust gas *EGRsol* that is recirculated into an intake air stream at step S409. The final stem S409 orders return for another execution of the exhaust gas recirculation control.

In the exhaust gas recirculation control carried out through steps S4O4 - S409, the degree of feedback control is increased during acceleration as compared during non-acceleration. The first correction amount of exhaust gas recirculation *EGRc1* used during non-acceleration remains 0 (zero) for intake air differences *(FAsol - FAir)* within the limits and is, however, inversely proportional to a change in intake air difference between a target amount of fresh intake air *FAsol* and an amount of fresh intake air *FAir.* In other words, there is provided a dead band for intake air differences in which no change in correction amount of exhaust gas recirculation is caused. As a result, the recirculation of exhaust gas which tends to cause unstable combustion during, for example, idling is restrained with an effect of enhancing the stability of combustion. On the other hand, the second correction amount of exhaust gas recirculation *EGRc2* used during acceleration is inversely proportional to a change in difference between a target amount of fresh intake air *FAsol* and an amount of fresh intake air *FAir,* exhaust gas is quickly recirculated when the engine 1 is accelerated with an effect of improved responsiveness of the air-fuel ratio control.

In this embodiment, the transitional engine operating state is not limited to acceleration and may include other operating conditions other than acceleration.

The exhaust gas recirculation control system of the invention is effective in all cases of controlling the amount of fuel injection to restrain a change in engine output torque upon an occurrence of the change as well as in the case where the idle speed feedback control is performed to develop a target idle speed during idling.

The exhaust gas recirculation system of the invention is incorporated to multi-cylinder diesel engines with the same effects as well as a four-cylinder diesel engine.

It is to be understood that although the present invention has been described with regard to preferred embodiments thereof, various other embodiments and variants may occur to those skilled in the art, which are intended to be covered by the following claims.

## Claims

1. An exhaust gas recirculation control system for controlling an amount of fuel to control air-fuel ratio, comprising exhaust gas recirculation means (13) for admitting partly exhaust gas into the engine (1), an exhaust gas recirculation valve (15) for regulating an amount of said exhaust gas that is admitted into the engine (1) by said exhaust gas recirculation means (13), air flow detecting means (11) for detecting an amount of fresh intake air introduced into the cylinder (2), target air-fuef ratio determination means (24) or determining a target air-fuel ratio, target air introduction amount-determination means for determining a target amount of fresh intake air that is introduced into the engine (1) on the basis of said target air-fuel ratio and said amount of fuel delivered to the engine (1), and control means (17, 24, 25, 26) for feedback controlling said amount of said exhaust gas that is admitted into the engine (1) through said exhaust gas recirculation valve (15) so as to bring said amount of fresh intake air to said target amount of fresh intake air, **characterized by**: said control means (17, 24, 25, 26) changing said amount of said exhaust gas (EGRsol) that is admitted into the engine (1) by correcting a target amount of exhaust gas recirculation (EGRo) by a first or second correction amount (EGRc1, EGRc2) of exhaust as recirculation depending on the engine operating conditions, so as to become greater during transitional engine operating conditions as compared with during non-transitional engine operating conditions.

2. The exhaust gas recirculation control system as defined in claim 1, wherein said target air-fuel ratio is determined to be close to a limit of generation of more than a specified amount of smoke.

3. The exhaust gas recirculation control system as defined in claim 1 or 2, wherein the air flow detecting means (11) is an air flow sensor (11), wherein said control means (17, 24, 25, 26) controls said amount of exhaust gas that is admitted into the engine (1) on the basis of said amount of fresh intake air and said target amount of fresh intake air to control said amount of fresh intake air so as to provide said target air-fuel ratio.

4. The exhaust gas recirculation control system as defined in claim 1, 2 or 3, and further comprising air-fuel sensor (20) for monitoring an actual air-fuel ratio.

5. The exhaust gas recirculation control system as defined in one of the preceding claims, wherein said control means (17, 24, 25, 26) controls an amount of fuel that is delivered into the engine (1) during idling so as to bring an engine speed to a target idling speed and determines said target amount of fresh intake air based on said amount of fuel and said target air-fuel ratio.

6. The exhaust gas recirculation control system as defined in one of the preceding claims, wherein said control means (17, 24 25, 26) controls the exhaust gas recirculation valve (15) so as to make said amount of exhaust gas (EGRsol) that is admitted into the engine (1) inversely proportional to said target amount of fresh intake air (FAsol).

7. The exhaust gas recirculation control system as defined in one of the preceding claims, wherein said control means (17, 24, 25, 26) controls the exhaust gas recirculation valve (15) so as to make said amount of exhaust gas (EGRsol) that is admitted into the engine (1) inversely proportional to a difference between said target amount of fresh intake air (FAsol) and said amount of fresh intake air (FAir) introduced into the cylinder (2).

## Patentansprüche

1. Regel- bzw. Steuersystem für Abgasrückführung bzw. -rezirkulation zum Regeln bzw. Steuern einer Kraftstoffmenge, um ein Luft-Kraftstoff-Verhältnis zu regeln bzw. zu steuern, umfassend Abgasrezirkulationsmittel (13) zum teilweisen Einlassen von Abgas in den Motor (1), ein Abgasrezirkulationsventil (15) zum Regulieren einer Menge des Abgases, welche in den Motor (1) durch die Abgasrezirkulationsmittel (13) eingelassen wird, Luftstromdetektierungsmittel (11) zum Detektieren einer Menge an frischer Einlaßluft, welche in den Zylinder (2) eingebracht bzw. eingelassen wird, Ziel-Luft-Kraftstoff-Verhältnis-Bestimmungsmittel (24) zum Bestimmen eines Ziel-Luft-Kraftstoff-Verhältnisses, Ziel-Lufteinlaßmengen-Bestimmungsmittel zum Bestimmen einer Zielmenge an frischer Einlaßluft, welche in den Motor (1) eingebracht wird, auf der Basis des Ziel-Luft-Kraftstoff Verhältnisses und der Menge an zu dem Motor (1) geliefertem Kraftstoff, und Regel- bzw. Steuermittel (17, 24, 25, 26) zum Feedbackregeln der Menge an Abgas, welche in den Motor (1) durch das Abgasrezirkulationsventil (15) eingelassen wird, um die Menge an frischer Einlaßluft auf die Zielmenge an frischer Einlaßluft zu bringen, **gekennzeichnet dadurch:**
**daß** die Regel- bzw. Steuermittel (17, 24, 25, 26) die Menge an Abgas (EGRsol), welche in den Motor (1) eingebracht wird, durch ein Korrigieren einer Zielmenge einer Abgasrezirkulation (EGRo) um eine erste oder zweite Korrekturmenge (EGRc1, EGRc2) einer Abgasrezirkulation in Abhängigkeit von den Motorbetriebsbedingungen ändern, um größer während Übergangsmotorbetriebsbedingungen im Vergleich während Nicht-Übergangsmotorbetriebsbedingungen zu werden.

2. Steuersystem für Abgasrückführung nach Anspruch 1, worin das Ziel-Luft-Kraftstoff Verhältnis bestimmt ist, um nahe einer Grenze einer Erzeugung von mehr als einer bestimmten Rauchmenge zu sein.

3. Steuersystem für Abgasrückführung nach Anspruch 1 oder 2, worin die Luftstromdetektionsmittel (11) ein Luftstromsensor (11) sind, worin die Regel- bzw. Steuermittel (17, 24, 25, 26) die Menge an Abgas, welche in den Motor (1) eingebracht wird, auf der Basis der Menge an frischer Einlaßluft und der Zielmenge an frischer Einlaßluft feedbacksteuern bzw. -regeln, um die Menge an frischer Einlaßluft zu regeln bzw. zu steuern, um das Ziel-Luft-Kraftstoff-Verhältnis zur Verfügung zu stellen.

4. Steuersystem für Abgasrückführung nach Anspruch 1, 2 oder 3, und weiters umfassend einen Luft-Kraftstoff-Sensor (20) zum Überwachen eines tatsächlichen Luft-Kraftstoff-Verhältnisses.

5. Steuersystem für Abgasrückführung nach einem der vorangehenden Ansprüche, worin die Regel- bzw. Steuermittel (17, 24, 25, 26) eine Menge an Kraftstoff, welche in den Motor (1) eingebracht wird, während eines Leerlaufs regeln bzw. steuern, um eine Motordrehzahl auf eine Ziel-Leerlaufdrehzahl zu bringen, und die Zielmenge an frischer Einlaßluft basierend auf der Kraftstoffmenge und dem Ziel-Luft-Kraftstoff-Verhältnis bestimmen.

6. Steuersystem für Abgasrückführung nach einem der vorangehenden Ansprüche, worin die Regel- bzw. Steuermittel (17, 24, 25, 26) das Abgasrezirkulationsventil (15) regeln bzw. steuern, um die Menge an Abgas (EGRsol), welche in den Motor (1) eingebracht wird, umgekehrt proportional zu der Zielmenge an frischer Einlaßluft (FAsol) zu machen.

7. Steuersystem für Abgasrückführung nach einem der vorangehenden Ansprüche, worin die Regel- bzw. Steuermittel (17, 24, 25, 26) das Abgasrezirkulationsventil (15) so regeln bzw. steuern, um die Menge an Abgas (EGRsol), welche in den Motor (1) eingebracht wird, umgekehrt proportional zu der Differenz zwischen der Zielmenge an frischer Einlaßluft (FAsol) und der Menge an frischer Einlaßluft (FAir) zu machen, welche in den Zylinder (2) eingebracht wird.

## Revendications

1. Système de commande de recirculation de gaz d'échappement pour contrôler une quantité de carburant afin de contrôler le rapport air- carburant, comprenant des moyens de recirculation de gaz d'échappement (13) pour admettre une partie des gaz d'échappement dans le moteur (1), une soupape de recirculation de gaz d'échappement (15) pour réguler une quantité desdits gaz d'échappement qui est admise dans le moteur (1) par lesdits moyens de recirculation de gaz d'échappement (13), des moyens de détection du flux d'air (11 ) pour détecter une quantité d'air frais aspiré introduit dans le cylindre (2), des moyens de détermination du rapport cible air-carburant (24) pou' déterminer un rapport cible air - carburant, des moyens de détermination de la quantité cible d'air à introduire pour déterminer une quantité cible d'air frais aspiré qui est introduite dans le moteur (1) sur la base dudit rapport cible air - carburant et ladite quantité de carburant fournie au moteur (1), et des moyens de contrôle (17, 24, 25, 26) pour contrôler rétroactivement ladite quantité desdits gaz d'échappement qui est admise dans le moteur (1) par ladite soupape de recirculation de gaz d'échappement (15) de manière à amener ladite quantité d'air frais aspiré à ladite quantité cible d'air frais aspiré, **caractérisé en ce que** lesdits moyens de contrôle (17, 24, 25, 26) changent ladite quantité desdits gaz d'échappement (EGRsol) qui est admise dans le moteur (1) en corrigeant une quantité cible de recirculation de gaz d'échappement (EGRo) par une première ou seconde quantité correctrice (EGRc1, EGRc2) de recirculation de gaz d'échappement en fonction des conditions de fonctionnement du moteur, de manière à devenir plus grande pendant les conditions transitoires de fonctionnement du moteur par rapport à ce qui se passe pendant les conditions non transitoires de fonctionnement du moteur.

2. Système de commande de recirculation de gaz d'échappement tel que défini dans la revendication 1, dans lequel ledit rapport cible air - carburant est déterminé pour être proche d'une limite de génération supérieure à une quantité spécifiée de fumée.

3. Système de commande de recirculation de gaz d'échappement tel que défini dans la revendication 1 ou 2, dans lequel le moyen de détection du flux d'air (11) est un capteur de flux d'air (11), dans lequel lesdits moyens de contrôle (17, 24, 25, 26) contrôlent rétroactivement ladite quantité de gaz d'échappement qui est admise dans le moteur (1) sur la base de ladite quantité d'air frais aspiré et de ladite quantité cible d'air frais aspiré pour contrôler la quantité d'air frais aspiré de manière à fournir ledit rapport cible air - carburant.

4. Système de commande de recirculation de gaz d'échappement tel que défini dans la revendication 1, 2 ou 3, et comprenant en outre un détecteur air-carburant (20) pour surveiller un rapport air - carburant effectif.

5. Système de commande de recirculation de gaz d'échappement tel que défini dans une des revendications précédentes, dans lequel lesdits moyens de contrôle (17, 24, 25, 26) contrôlent une quantité de carburant qui est fournie au moteur (1) pendant le ralenti afin d'amener la vitesse du moteur à une vitesse cible de ralenti et déterminent ladite quantité cible d'air frais aspiré sur la base de ladite quantité de carburant et dudit rapport cible air - carburant.

6. Système de commande de recirculation de gaz d'échappement tel que défini dans une des revendications précédentes, dans lequel lesdits moyens de contrôle (17, 24, 25, 26) contrôlent la soupape de recirculation de gaz d'échappement (15) afin de rendre ladite quantité de gaz d'échappement (EGRsol) qui est admise dans le moteur (1) inversement proportionnelle à ladite quantité cible d'air frais aspiré (FAsol).

7. Système de commande de recirculation de gaz d'échappement tel que défini dans une des revendications précédentes, dans lequel lesdits moyens de contrôle (17, 24, 25, 26) contrôlent la soupape de recirculation de gaz d'échappement (15) afin de rendre ladite quantité de gaz d'échappement (EGRsol) qui est admise dans le moteur (1) inversement proportionnelle à la différence entre ladite quantité cible d'air frais aspiré (FAsol) et ladite quantité d'air frais aspiré (Fair) introduite dans le cylindre (2).
